# DEMANDE DE BREVET EUROPEEN

(11) **EP 3 693 211 A1**
(43) Date de publication de la demande: **12.08.2020**
(21) Numéro de dépôt: 20156412.7
(22) Date de dépôt: 10.02.2020
(51) Int. Cl.: B60N 2/30, B60N 3/00, B61D 33/00

(54) **DISPOSITIF DE CONFORT À ENCOMBREMENT RÉDUIT, NOTAMMENT POUR UN PASSAGER DE VÉHICULE DE TRANSPORT PUBLIC**

(30) Priorité: 11.02.2019 FR 1901353
(71) Demandeur: ALSTOM Transport Technologies, 93400 Saint-Ouen (FR)
(72) Inventeur: MIGLIANICO, Denis, 69160 TASSIN (FR); DA COSTA, Antonio, 94340 JOINVILLE LE PONT (FR)
(74) Mandataire: Lavoix

(57) **Abrégé**

Le dispositif de confort comporte une paroi de support verticale et un siège comprenant une assise (22) relié à la paroi de support par une liaison pivot (24). L'assise (22) est mobile autour de la liaison pivot (24) entre une position rabattue sensiblement verticale et une position déployée sensiblement horizontale. L'assise (22) comporte une partie mobile (44) mobile en translation dans une direction longitudinale (X) entre une position de base et une position étendue. L'assise (22) comporte des moyens verrouillables (56, 58) d'anti-retour de la partie mobile d'assise (44), autorisant le déplacement en translation de la partie mobile d'assise (44) dans un premier sens de déplacement allant de la position de base vers la position étendue et interdisant le déplacement en translation de la partie mobile d'assise (44) dans un second sens de déplacement opposé au premier lorsque les moyens d'anti-retour (56, 58) sont verrouillés.

## Description

La présente invention concerne un dispositif de confort pour un utilisateur, notamment pour un passager de véhicule de transport public, et plus particulièrement de véhicule ferroviaire.

On connait déjà dans l'état de la technique, notamment d'après FR 3 040 030, un dispositif de confort pour un utilisateur, notamment un passager de véhicule de transport public, et plus particulièrement de véhicule ferroviaire, comportant une paroi de support verticale et un siège comprenant une assise relié à la paroi de support par l'intermédiaire d'une liaison pivot, l'assise étant mobile autour de la liaison pivot entre une position rabattue sensiblement verticale et une position déployée sensiblement horizontale, l'assise étant reliée à la liaison pivot par des moyens de coulissement, de sorte que l'assise en position déployée est mobile en translation dans une direction longitudinale entre une position de base proche de la paroi de support, et une position étendue éloignée de la paroi de support.

De tels dispositifs de confort sont par exemple destinés à équiper des véhicules de transport public à forte densité de passagers, ces dispositifs de confort étant peu encombrants dans la direction longitudinale.

L'invention a notamment pour but d'améliorer le confort d'un tel dispositif.

A cet effet, l'invention a notamment pour objet un dispositif de confort pour un utilisateur, notamment un passager de véhicule de transport public, et plus particulièrement de véhicule ferroviaire, comportant une paroi de support verticale et un siège comprenant une assise relié à la paroi de support par l'intermédiaire d'une liaison pivot, l'assise étant mobile autour de la liaison pivot entre une position rabattue sensiblement verticale et une position déployée sensiblement horizontale, l'assise comportant une partie mobile reliée à la liaison pivot par l'intermédiaire de moyens de coulissement, de sorte que la partie mobile de l'assise en position déployée est mobile en translation dans une direction longitudinale entre une position de base proche de la paroi de support, et une position étendue éloignée de la paroi de support, caractérisé en ce que l'assise comporte des moyens verrouillables d'anti-retour de la partie mobile d'assise, autorisant le déplacement en translation de la partie mobile d'assise dans un premier sens de déplacement allant de la position de base vers la position étendue et interdisant le déplacement en translation de la partie mobile d'assise dans un second sens de déplacement opposé au premier lorsque les moyens d'anti-retour sont verrouillés.

Grâce aux moyens de verrouillage, l'assise est plus stable, et ne se déplace pas de manière intempestive vers l'arrière, notamment en cas d'accélération du véhicule.

Un dispositif de confort selon l'invention peut comporter en outre l'une ou plusieurs des caractéristiques suivantes, prises seules ou selon toutes combinaisons techniquement envisageables :
- L'assise comporte une partie structurelle portant la liaison pivot, et la partie mobile d'assise comporte : un plateau de support relié à la partie structurelle par l'intermédiaire des moyens de coulissement, et un panneau supérieur d'assise, destiné à accueillir l'utilisateur, le panneau supérieur d'assise étant mobile par rapport au plateau de support, entre une première position d'utilisation et une seconde position, le verrouillage des moyens d'anti-retour étant indexé sur la position du panneau supérieur d'assise par rapport au plateau de support, les moyens d'anti-retour étant verrouillés lorsque le panneau supérieur d'assise est dans la première position, et déverrouillés lorsque le panneau supérieur d'assise est dans la seconde position.
- Les moyens d'anti retour comportent au moins une crémaillère portée par la partie structurelle, et au moins une roue libre crantée complémentaire portée par le panneau supérieur d'assise, chaque roue libre crantée coopérant avec la crémaillère correspondante lorsque le panneau supérieur d'assise est dans la première position, et étant désengagée de cette crémaillère lorsque le panneau supérieur d'assise est dans la seconde position.
- Le dispositif de confort comporte des premiers moyens élastiques de rappel du panneau supérieur d'assise vers sa seconde position, agencés entre le panneau supérieur d'assise et le plateau de support.
- Le dispositif de confort comporte des moyens de transmission d'efforts longitudinaux entre le panneau supérieur d'assise et le plateau de support, comportant par exemple au moins une lame s'étendant dans la direction longitudinale entre une première extrémité solidarisée au plateau de support et une seconde extrémité solidarisée au panneau supérieur d'assise.
- Le dispositif de confort comporte des moyens de blocage de l'assise en position déployée, comprenant un poussoir porté par la paroi de support, et une tige portée par la partie mobile, la tige coopérant avec le poussoir lorsque la partie mobile est en position de base, et étant éloignée du poussoir lorsque la partie mobile est en position étendue, l'assise étant bloquée en position déployée lorsque la tige est éloignée du poussoir.
- Le dispositif de confort comporte des seconds moyens de rappel élastique de la partie mobile vers la position de base.
- Le dispositif de confort comporte une seconde paroi s'étendant en regard de la première paroi et portant une tablette rabattable, la seconde paroi présentant une hauteur inférieure à celle de la première paroi.
- Le siège comporte un appuie-tête, la seconde paroi s'étendant en hauteur jusqu'en dessous de l'appuie-tête.

L'invention concerne également un véhicule de transport public, caractérisé en ce qu'il comporte un dispositif de confort tel que décrit précédemment.

L'invention sera mieux comprise à la lecture de la description qui va suivre, donnée uniquement à titre d'exemple et faite en se référant aux figures annexées, parmi lesquelles :
- [Fig 1] la figure 1 est une vue schématique de côté d'un dispositif de confort selon un exemple de mode de réalisation de l'invention ;
- [Fig 2] la figure 2 est une vue en perspective, partiellement par transparence, d'un détail du dispositif de confort de la figure 1.

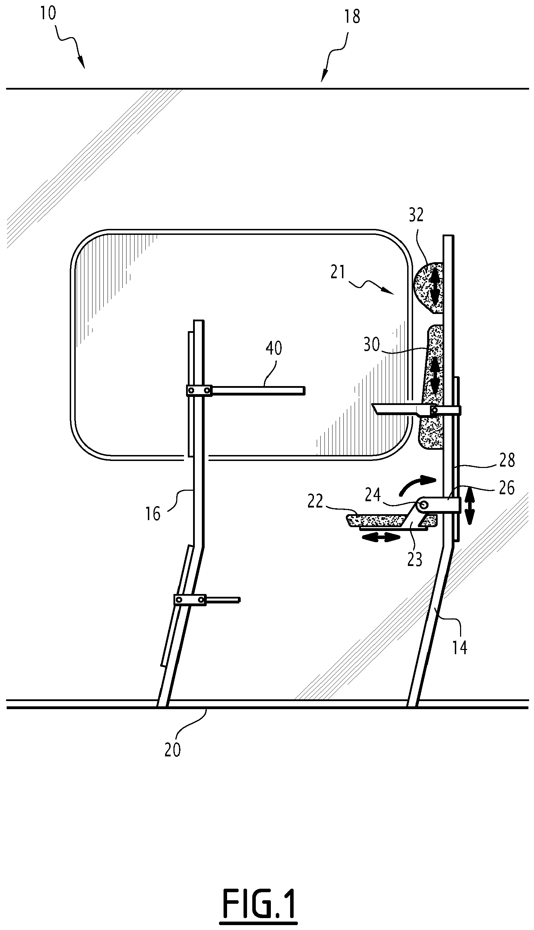

On a représenté, sur la figure 1, un dispositif 10 de confort pour un utilisateur, par exemple pour un passager de véhicule de transport public, par exemple d'un véhicule ferroviaire. Un tel dispositif de confort 10 est destiné à être agencé dans une salle du véhicule de transport public, en vue d'accueillir un utilisateur souhaitant notamment disposer d'un espace de travail.

Le dispositif de confort 10 comporte une première paroi verticale 14, et de préférence une seconde paroi verticale 16, telles que les première 14 et seconde 16 parois verticales sont agencées l'une en regard de l'autre, et délimitent entre elles un espace d'accueil 18 pour l'utilisateur.

Avantageusement, les première 14 et second 16 parois ne s'étendent pas jusqu'au plafond de la salle.

Plus particulièrement, la première paroi 14 présente de préférence une hauteur supérieure à la taille d'un utilisateur, par exemple une hauteur comprise entre 1m80 et 2m. En revanche, la seconde paroi 16 présente de préférence une hauteur inférieure à la taille d'un utilisateur, par exemple une hauteur inférieure à 1m50, afin d'offrir une vision dégagée à l'utilisateur.

Avantageusement, au moins l'une des première 14 et seconde 16 parois verticales est mobile par rapport à l'autre, de sorte que l'espacement entre ces première 14 et seconde 16 parois verticales est susceptible de varier, en approchant ou en éloignant ces première 14 et seconde 16 parois verticales l'une de l'autre.

A cet effet, au moins l'une des première 14 et seconde 16 parois verticales est montée mobile sur une glissière horizontale 20. De préférence, les deux parois verticales 14, 16 sont montées mobile sur cette même glissière horizontale 20, ou en variante chacune sur une glissière distincte.

Avantageusement, le dispositif de confort 10 comporte des moyens de blocage propres à immobiliser la première 14 et/ou la seconde 16 paroi verticale dans une position choisie sur la glissière correspondante. De tels moyens de blocage peuvent être de tout type envisageable. Par exemple, les moyens de blocage comportent des pions rétractables portés par la paroi verticale 14, 16 correspondante, susceptibles de coopérer avec des crans ménagés sur la glissière 20.

La première paroi verticale 14 comporte un siège 21 comprenant une assise rabattable 22.

L'assise rabattable 22 est reliée par une liaison pivot 24 à cette première paroi verticale 14. De manière optionnelle, l'assise rabattable 22 est reliée par cette liaison pivot à un organe de guidage 26 mobile le long d'une liaison glissière verticale 28. Ainsi, l'assise 22 peut être déplacée verticalement afin de s'adapter à la taille de l'utilisateur.

La liaison pivot 24 autorise le pivotement de l'assise 22 entre une position entre une position rabattue sensiblement verticale et une position déployée sensiblement horizontale. La liaison pivot 24 est élastique, rappelant élastiquement l'assise 22 vers sa position rabattue.

Le siège 20 comporte par ailleurs un dossier 30, par exemple mobile verticalement indépendamment de l'assise 22. L'éloignement vertical entre le dossier 30 et l'assise 22 peut ainsi être réglée par l'utilisateur, pour s'adapter à sa taille et à la position qu'il souhaite adopter.

Avantageusement, le siège 20 comporte également un appui-tête 32 mobile verticalement indépendamment de l'assise 22, et indépendamment du dossier 30. Les positions relatives de l'appui-tête 32, du dossier 30 et de l'assise 22 peuvent donc être réglées par l'utilisateur, pour s'adapter à sa taille et à la position qu'il souhaite adopter.

Dans un mode de réalisation préféré, la première paroi 14 s'étend en hauteur jusqu'au-dessus de la position la plus haute de l'appuie-tête 32. Par ailleurs, la seconde paroi 16 s'étend en hauteur jusqu'en dessous de la position la plus basse de l'appuie-tête 32.

La seconde paroi verticale 16 comporte par exemple une tablette 40 rabattable, de préférence mobile verticalement. La tablette 40 est destinée à recevoir un accessoire de l'utilisateur, par exemple un ordinateur portable, une tablette numérique, un livre, etc.

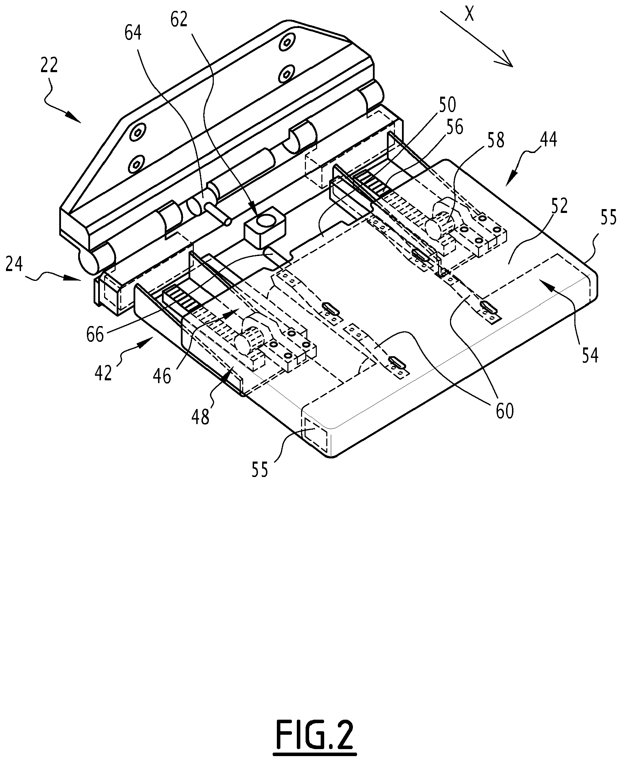

L'assise 22 est représentée plus en détail sur la figure 2. Sur cette figure 2, l'assise 22 est représentée en position déployée, sensiblement horizontale.

L'assise 22 comporte au moins une partie structurelle 42 portant la liaison pivot 24, et une partie mobile 44 reliée à la partie structurelle 42 par des moyens de coulissement 46 définis dans une direction longitudinale X.

Ainsi, la partie mobile 44 de l'assise 22 en position déployée est mobile en translation dans la direction longitudinale entre une position de base proche de la première paroi de support 14, et une position étendue éloignée de la première paroi de support 14.

Les moyens de coulissement 46 comportent par exemple au moins une glissière à billes, par exemple deux glissières à billes.

L'assise 22 comporte des moyens verrouillables 48 d'anti-retour de la partie mobile 44, autorisant le déplacement en translation de la partie mobile 44 dans un premier sens de déplacement allant de la position de base vers la position étendue et interdisant le déplacement en translation de l'assise dans un second sens de déplacement opposé au premier lorsque les moyens d'anti-retour 48 sont verrouillés.

La partie mobile 44 comporte un plateau de support 50 relié à la partie structurelle 42 par l'intermédiaire des moyens de coulissement 46. La partie mobile 44 comporte par ailleurs un panneau supérieur d'assise 52, destiné à accueillir l'utilisateur, le panneau supérieur d'assise 52 étant mobile par rapport au plateau de support 50, entre une première position d'utilisation et une seconde position. Le panneau supérieure d'assise 52 est par exemple destiné à porter un revêtement rembourré pour recevoir l'utilisateur.

Le verrouillage des moyens d'anti-retour 48 est indexé sur la position du panneau supérieur d'assise 52 par rapport au plateau de support 50. Plus particulièrement, les moyens d'anti-retour 48 sont verrouillés lorsque le panneau supérieur d'assise 52 est dans la première position, et déverrouillés lorsque le panneau supérieur d'assise 52 est dans la seconde position.

La première position du panneau supérieur d'assise 52 est une position basse, qui correspond à la position dans laquelle se trouve le panneau supérieur d'assise 52 lorsque l'utilisateur est assis dessus.

La seconde position du panneau supérieur d'assise 52 est une position haute, dans laquelle le panneau supérieur d'assise 52 est au moins en partie éloigné du plateau de support dans une direction verticale. Cette position haute correspond à la position du panneau supérieur d'assise 52 lorsque personne n'est assis dessus.

L'assise 22 comportant des premiers moyens élastiques 54 de rappel du panneau supérieur d'assise 52 vers sa seconde position, les premiers moyens élastiques 54 étant agencés entre le panneau supérieur d'assise 52 et le plateau de support 50. Par exemple, les moyens élastiques 54 comportent des plots élastiques interposés entre le panneau supérieur d'assise 52 et le plateau de support 50, pincés entre le panneau supérieur d'assise 52 et le plateau de support 50 lorsque le panneau supérieur d'assise 52 est dans sa première position.

Le panneau supérieur d'assise 52 comporte des rebords 55 coopérant avec des bords complémentaires du plateau de support 50 pour limiter l'éloignement entre le panneau supérieur d'assise 52 et le plateau de support 50, et ainsi définir la seconde position.

Les moyens d'anti retour 48 comportent au moins une crémaillère 56 (par exemple deux) portée par la partie structurelle 42, et au moins une roue libre crantée 58 complémentaire (par exemple deux) portée par le panneau supérieur d'assise 52. Chaque roue libre crantée 58 coopère avec la crémaillère 56 correspondante lorsque le panneau supérieur d'assise 52 est dans la première position, et est désengagée de la crémaillère 56 correspondante lorsque le panneau supérieur d'assise 52 est dans la seconde position. On rappelle qu'une roue libre est une roue ne pouvant tourner autour de son axe que dans un sens de rotation.

Ainsi, lorsque le panneau supérieur d'assise 52 est dans sa première position, c'est-à-dire que l'utilisateur est assis dessus, la partie mobile 44 peut se déplacer en translation, dans la direction longitudinale, dans le premier sens, chaque roue libre 58 étant orientée pour tourner librement, en engrainant avec la crémaillère 56 correspondante. En revanche, chaque roue libre 48 étant bloquée en rotation dans l'autre sens, il n'est pas possible de déplacer la partie mobile 44 dans le second sens lorsque chaque roue libre 48 est engagée dans la crémaillère 56 correspondante, c'est-à-dire lorsque le panneau supérieur d'assise 52 est dans la première position.

Par ailleurs, lorsque le panneau supérieur d'assise 52 est dans sa seconde position, chaque roue libre 58, portée par ce panneau supérieur d'assise 52, est désengagée de la crémaillère 56 correspondante. Il en résulte que la partie mobile 44 peut se déplacer librement en translation dans la direction longitudinale X, dans les premier ou second sens.

La partie mobile 44 comporte par ailleurs des moyens 60 de transmission d'efforts longitudinaux entre le panneau supérieur d'assise 52 et le plateau de support 50. Ces moyens de transmission 60 comportent par exemple au moins une lame (par exemple quatre lames) s'étendant dans la direction longitudinale X entre une première extrémité solidarisée au plateau de support 50 et une seconde extrémité solidarisée au panneau supérieur d'assise 52. Chaque lame est souple verticalement, de manière à permettre le déplacement vertical du panneau supérieur d'assise 52 par rapport au plateau de support 50. En revanche, chaque lame est peu, ou pas, extensible longitudinalement pour permettre de transmettre un effort longitudinal entre le panneau supérieur d'assise 52 et le plateau de support 50.

Avantageusement, l'assise 22 comporte des seconds moyens 62 de rappel élastique de la partie mobile 44 vers la position de base. Ces seconds moyens de rappel 62 sont par exemple agencés entre la partie structurelle 42 et la partie mobile 44.

Ainsi, lorsque l'utilisateur quitte le siège, le plateau supérieur d'assise 52 passe dans sa seconde position par l'effet des premiers moyens de rappel 54, si bien que les roues libres 58 se désengagent des crémaillères 56, libérant les mouvements de la partie mobile 44. La partie mobile 44 est alors rappelée vers sa position de base par les seconds moyens de rappel 62.

De préférence, l'assise 22 comporte des moyens de blocage de l'assise en position déployée, comprenant un poussoir 64 porté par la paroi de support 14, et une tige 66 portée par la partie mobile 44, et plus particulièrement par le plateau de support 50. La tige 66 s'étend en regard du poussoir 64, de manière à coopérer avec le poussoir 64 lorsque la partie mobile 44 est en position de base, et à être éloignée du poussoir 64 lorsque la partie mobile 44 est en position étendue. L'assise 22 est bloquée en position déployée lorsque la tige 66 est éloignée du poussoir 64, et libérée lorsque le poussoir 64 est actionné par la tige 66.

Ainsi, l'assise 22 reste dans la position déployée tant que la partie mobile 44 n'est pas revenue dans sa position de base. Cela permet d'assurer un bon repositionnement de la partie mobile 44 avant de rabattre l'assise 22.

## Revendications

1. Dispositif de confort (10) pour un utilisateur, notamment un passager de véhicule de transport public, et plus particulièrement de véhicule ferroviaire, comportant une paroi de support verticale (14) et un siège (21) comprenant une assise (22) relié à la paroi de support (14) par l'intermédiaire d'une liaison pivot (24), l'assise (22) étant mobile autour de la liaison pivot (24) entre une position rabattue sensiblement verticale et une position déployée sensiblement horizontale, l'assise (22) comportant une partie mobile (44) reliée à la liaison pivot (24) par l'intermédiaire de moyens de coulissement (46), de sorte que la partie mobile (44) de l'assise (22) en position déployée est mobile en translation dans une direction longitudinale (X) entre une position de base proche de la paroi de support (14), et une position étendue éloignée de la paroi de support (14), **caractérisé en ce que** l'assise (22) comporte des moyens verrouillables (56, 58) d'anti-retour de la partie mobile d'assise (44), autorisant le déplacement en translation de la partie mobile d'assise (44) dans un premier sens de déplacement allant de la position de base vers la position étendue et interdisant le déplacement en translation de la partie mobile d'assise (44) dans un second sens de déplacement opposé au premier lorsque les moyens d'anti-retour (56, 58) sont verrouillés.

2. Dispositif de confort (10) selon la revendication 1, dans lequel l'assise (22) comporte une partie structurelle (42) portant la liaison pivot (24), et la partie mobile d'assise (44) comporte :
- un plateau de support (50) relié à la partie structurelle (42) par l'intermédiaire des moyens de coulissement (46), et
- un panneau supérieur d'assise (52), destiné à accueillir l'utilisateur, le panneau supérieur d'assise (52) étant mobile par rapport au plateau de support (50), entre une première position d'utilisation et une seconde position, le verrouillage des moyens d'anti-retour (56, 58) étant indexé sur la position du panneau supérieur d'assise (52) par rapport au plateau de support (50), les moyens d'anti-retour (56, 58) étant verrouillés lorsque le panneau supérieur d'assise (52) est dans la première position, et déverrouillés lorsque le panneau supérieur d'assise (52) est dans la seconde position.

3. Dispositif de confort (10) selon la revendication 2, dans lequel les moyens d'anti retour comportent au moins une crémaillère (56) portée par la partie structurelle (42), et au moins une roue libre crantée (58) complémentaire portée par le panneau supérieur d'assise (52), chaque roue libre crantée (58) coopérant avec la crémaillère (56) correspondante lorsque le panneau supérieur d'assise (52) est dans la première position, et étant désengagée de cette crémaillère (56) lorsque le panneau supérieur d'assise (52) est dans la seconde position.

4. Dispositif de confort (10) selon la revendication 3, comportant des premiers moyens élastiques (54) de rappel du panneau supérieur d'assise (52) vers sa seconde position, agencés entre le panneau supérieur d'assise (52) et le plateau de support (50).

5. Dispositif de confort (10) selon l'une quelconque des revendications 2 à 4, comportant des moyens (60) de transmission d'efforts longitudinaux entre le panneau supérieur d'assise (52) et le plateau de support (50), comportant par exemple au moins une lame s'étendant dans la direction longitudinale (X) entre une première extrémité solidarisée au plateau de support (50) et une seconde extrémité solidarisée au panneau supérieur d'assise (52).

6. Dispositif de confort (10) selon l'une quelconque des revendications précédentes, comportant des moyens de blocage de l'assise en position déployée, comprenant un poussoir (64) porté par la paroi de support (14), et une tige (66) portée par la partie mobile (44), la tige (66) coopérant avec le poussoir (64) lorsque la partie mobile (44) est en position de base, et étant éloignée du poussoir (64) lorsque la partie mobile (44) est en position étendue, l'assise (22) étant bloquée en position déployée lorsque la tige (66) est éloignée du poussoir (64).

7. Dispositif de confort (10) selon l'une quelconque des revendications précédentes, comportant des seconds moyens (62) de rappel élastique de la partie mobile (44) vers la position de base.

8. Dispositif de confort (10) selon l'une quelconque des revendications précédentes, comportant une seconde paroi (16) s'étendant en regard de la première paroi (14) et portant une tablette rabattable (40), la seconde paroi (16) présentant une hauteur inférieure à celle de la première paroi (14).

9. Dispositif de confort (10) selon la revendication 8, dans lequel le siège comporte un appuie-tête (32), la seconde paroi (16) s'étendant en hauteur jusqu'en dessous de l'appuie-tête (32).

10. Véhicule de transport public, notamment véhicule ferroviaire, comprenant un dispositif de confort (10) selon l'une quelconque des revendications précédentes.
